# EUROPÄISCHE PATENTSCHRIFT

(11) **EP 1 847 736 B1**
(45) Veröffentlichungstag und Bekanntmachung des Hinweises auf die Patenterteilung: **03.09.2008**
(21) Anmeldenummer: 06008057.9
(22) Anmeldetag: 19.04.2006
(51) Int. Cl.: F16J 15/16, F16J 15/56

(54) **Dichtungsanordnung**
Sealing arrangement
Dispositif d'étanchéité

(43) Veröffentlichungstag der Anmeldung: 24.10.2007
(73) Patentinhaber: Carl Freudenberg KG, 69469 Weinheim (DE)
(72) Erfinder: Barillas, Gonzalo, 36304 Alsfeld (DE); Kinsch, Patrick, 34590 Wabern (DE)

(56) Entgegenhaltungen:
- EP-A- 0 040 856

## Beschreibung

### Technisches Gebiet

Die Erfindung betrifft eine Dichtungsanordnung, umfassend einen Dichtring zur Abdichtung von zwei relativ translatorisch zueinander beweglichen ersten und zweiten Maschinenelementen, die einander mit radialem Abstand umschließen, wobei der durch den Abstand gebildete Spalt als Dichtspalt ausgebildet ist, wobei der Dichtring in einer im Wesentlichen kongruent gestalteten, in Richtung des relativ beweglichen zweiten Maschinenelements offenen Einbaunut des ersten Maschinenelements schwimmend angeordnet ist, mit einem statisch in der Einbaunut abdichtenden radialstegförmig ausgebildeten ersten Dichtteil und einem dynamisch abdichtenden zweiten Dichtteil, der die relativ zur Einbaunut bewegliche abzudichtende Oberfläche des zweiten Maschinenelements dichtend berührt.

### Stand der Technik

Aus der EP 0 040 856 A1 ist ein Dichtring bekannt, der, im Längsschnitt betrachtet, im Wesentlichen rechteckig ausgebildet ist, wobei der erste und der zweite Dichtteil im Wesentlichen dieselbe Erstreckung in axialer Richtung aufweisen und wobei der Dichtring in einer im Wesentlichen U-förmig ausgebildeten Einbaunut angeordnet ist. Bei der vorbekannten Dichtungsanordnung begrenzt der dynamisch abdichtende zweite Dichtteil axial beiderseits stirnseitig mit der Oberfläche der benachbarten Einbaunut jeweils einen Kanal zur jeweils stirnseitigen Druckbeaufschlagung des zweiten Dichtteils. Der erste Dichtteil liegt demgegenüber sowohl an den einander axial benachbart zugeordneten Begrenzungswandungen der Einbaunut als auch im Nutgrund unter elastischer Vorspannung dichtend an.

Aus der EP 0 660 015 B1 ist eine weitere Dichtungsanordnung zur Abdichtung von zwei relativ translatorisch zueinander bewegten Maschinenteilen bekannt, die einander umschließen, umfassend eine Dichtung mit einem statisch abdichtenden ersten Dichtteil, der im Nutgrund einer im Wesentlichen U-förmig in Richtung des relativ beweglichen Maschinenteils offenen Nut von einem der Maschinenteile angeordnet ist und einen dynamisch abdichtenden zweiten Dichtteil, der die relativ zum Nutgrund bewegliche Oberfläche des anderen Maschinenteils dichtend berührt, wobei der erste und der zweite Dichtteil einstückig ineinander übergehend ausgebildet sind und aus elastomerem Werkstoff bestehen, wobei der erste und der zweite Dichtteil durch einen sich im Wesentlichen in radialer Richtung erstreckenden, kreisringförmig ausgebildeten und membranartig dünnen Verbindungssteg verbunden sind, wobei der Verbindungssteg einstückig und materialeinheitlich mit den beiden Dichtteilen ausgebildet ist und wobei der Verbindungssteg auf einander in axialer Richtung gegenüberliegenden Seiten Anschlagpuffer aufweist, die zur Begrenzung von axialen Extremauslenkungen an die benachbart angrenzenden Begrenzungsflächen der Nut anlegbar sind. Der zweite Dichtteil ist axial beiderseits durch Flächen begrenzt, die jeweils mit zumindest einer sich im Wesentlichen in radialer Richtung erstreckenden Ausnehmung versehen sind, wobei die abzudichtenden Räume axial beiderseits der Dichtung und die jeweils angrenzenden Kammern der in axialer Richtung unterteilten Nut gemeinsam druckbeaufschlagbar miteinander verbunden sind. Die vorbekannte Dichtung ist im Wesentlichen Doppel-T-förmig ausgebildet, wobei der statisch abdichtende erste Dichtteil den in axialer Richtung eben ausgebildeten Nutgrund, der sich rechtwinkelig zu den beiden axialen Begrenzungsflächen der Nut erstreckt, unter radialer Vorspannung dichtend berührt. Auch die Begrenzungsflächen der Nut werden vom ersten Dichtteil unter axialer Vorspannung dichtend berührt. Der erste Dichtteil ist im Nutgrund in radialer Richtung eingespannt.

### Darstellung der Erfindung

Der Erfindung liegt die Aufgabe zugrunde, eine Dichtungsanordnung der Eingangs genannten Art derart weiter zu entwickeln, dass die Montage des Dichtrings vereinfacht ist, dass die Reibung reduziert wird und dass die Herstellung des Dichtrings durch seine einfache Geometrie fertigungstechnisch und wirtschaftlich vorteilhaft ist.

Diese Aufgabe wird erfindungsgemäß durch eine Dichtungsanordnung nach Anspruch 1 gelöst. Auf vorteilhafte Ausgestaltungen nehmen die Unteransprüche Bezug.

Zur Lösung der Aufgabe ist eine Dichtungsanordnung vorgesehen, umfassend einen Dichtring zur Abdichtung von zwei relativ translatorisch zueinander beweglichen ersten und zweiten Maschinenelementen, die einander mit radialem Abstand umschließen, wobei der durch den Abstand gebildete Spalt als Dichtspalt ausgebildet ist, wobei der Dichtring, im Längsschnitt betrachtet, im Wesentlichen T-förmig ausgebildet ist und in einer im Wesentlichen kongruent gestalteten, in Richtung des relativ beweglichen zweiten Maschinenelements offenen Einbaunut des ersten Maschinenelements schwimmend angeordnet ist, mit einem statisch in der Einbaunut abdichtenden radialstegförmig ausgebildeten ersten Dichtteil und einem dynamisch abdichtenden, sich in axialer Richtung erstreckenden zweiten Dichtteil, der die relativ zur Einbaunut bewegliche abzudichtende Oberfläche des zweiten Maschinenelements dichtend berührt, wobei der Dichtring axial beiderseits stirnseitig mit der Oberfläche der benachbarten Einbaunut jeweils zumindest einen sich teilweise in den Bereich des ersten Dichtteils erstreckenden Kanal zur jeweils stimseitigen Druckbeaufschlagung des ersten Dichtteils aufweist.

Die abzudichtende Oberfläche des zweiten Maschinenelements kann dabei eine kreisrunde Bohrung oder eine nicht-kreisrunde Ausnehmung, beispielsweise eine ovale Ausnehmung, begrenzen.

Bei der zuvor beschriebenen Dichtungsanordnung ist von Vorteil, dass der dynamisch beanspruchte zweite Dichtbereich, bezogen auf den statisch wirksamen ersten Dichtbereich, vergleichsweise massiv und daher steif genug ausgebildet ist, um allein durch Umfangsstauchung eine ausreichende Dichtkraft zu erzeugen. Der statisch beanspruchte erste Dichtbereich hat auf die radiale Vorspannung, mit der der zweite Dichtteil die abzudichtende Oberfläche des zweiten Maschinenelements dichtend berührt, nur einen vernachlässigbar geringen Einfluss. Dadurch, dass der Dichtring durch den ersten Dichtteil nicht radial in Richtung der abzudichtenden Oberfläche des zweiten Maschinenelements verpresst wird, sind geringe Reibkräfte zwischen dem zweiten Dichtteil und der abzudichtenden Oberfläche möglich, wodurch die gegeneinander abzudichtenden Maschinenelemente auch bei geringer Druckdifferenz der gegeneinander abzudichtenden Räume besonders feinfühlig in axialer Richtung hin- und herbewegbar sind. Durch die geringen Reibkräfte ist außerdem der abrasive Verschleiß des zweiten Dichtteils auf ein Minimum reduziert, sodass die erfindungsgemäße Dichtungsanordnung gleichbleibend gute Gebrauchseigenschaften während einer langen Gebrauchsdauer aufweist.

Die in axialer Richtung beiderseits angeordneten, stirnseitigen Kanäle sind für eine Druckbeaufschlagung erforderlich. Durch den schwimmenden Einbau des Dichtrings in der Einbaunut verändert sich, proportional abhängig vom abzudichtenden Druck, die Anpresskraft, mit der sowohl der erste Dichtteil als auch der zweite Dichtteil auf ihren jeweiligen Dichtflächen dichtend abgestützt sind.
Für die schwimmende Anordnung des Dichtrings in der Einbaunut ist es entscheidend, dass der erste Dichtteil relativ zum entsprechenden Bereich der Einbaunut beweglich ist. Nur dadurch besteht die Möglichkeit, dass der erste Dichtbereich von der Seite vergleichsweise höheren Drucks in Richtung des vergleichsweise niedrigeren Drucks in axialer Richtung verlagert wird und dadurch den Einbauraum zuverlässig statisch abdichtet. Die Abdichtung des Einbauraums erfolgt, im Gegensatz zur Dichtungsanordnung aus dem Stand der Technik, nicht dadurch, dass der erste Dichtteil in radialer Richtung den Nutgrund unter elastischer Vorspannung dichtend berührt, sondern dadurch, dass sich der erste Dichtteil nur an der axial angrenzenden Oberfläche der Einbaunut unter axialer elastischer Anpressung dichtend anlegt; eine dichtende Berührung des ersten Dichtteils am Nutgrund erfolgt nicht unbedingt. Der erste Dichtteil weist auf seinen sich in axialer Richtung gegenüberliegend angeordneten und in radialer Richtung erstreckenden Stirnseiten bevorzugt jeweils zumindest eine in axialer Richtung erhabene und umfangsseitig umlaufende Dichtkante auf, die unter elastischer Vorspannung dichtend an die jeweils axial benachbart angrenzenden Seitenwände der Einbaunut anlegbar sind. Sobald sich durch einseitige Druckbeaufschlagung des Dichtrings das erste Dichtteil auf der dem verlgeichsweise niedrigeren Druck zugewandten Seite an die axial benachbart angrenzende Seitenwand anlegt, legt sich die Dichtkante mit vergleichsweise höherer spezifischer Flächenpressung besonders zuverlässig dichtend an dieser Seitenwand an. Auch besteht generell die Möglichkeit, dass auf jeder Stirnseite zumindest zwei in einer funktionstechnischen Reihenschaltung angeordnete Dichtkanten angeordnet sind, um die statische Abdichtung zu verbessern.

Nach einer anderen Ausgestaltung besteht die Möglichkeit, dass die umfangsseitig umlaufende Dichtkante nicht elastisch vorgespannt in der Nut anliegt.

Die dynamischen Dichtkanten sind bevorzugt am dem zweiten Dichtteil abgewandten Ende der Stirnseiten angeordnet. Dadurch ist von Vorteil, dass sich die Kanäle vom zweiten Dichtteil radial bis annähernd zum Nutgrund der Einbaunut erstrecken und sich nahezu die gesamte radiale Erstreckung des ersten Dichtteils bei axial einseitiger Druckbeaufschlagung statisch dichtend an die Seitenwand des vergleichsweise niedrigeren Drucks anlegt. Die Kreisringfläche, auf die der Druck wirkt, ist durch die radial möglichst weit innen angeordneten Dichtkanten vergleichsweise groß, sodass eine vergleichsweise geringe Druckdifferenz ausreicht, den Dichtring mit ausreichender Kraft an die entsprechende Dichtfläche der Einbaunut dichtend anzulegen.

Der zweite Dichtteil kann, im Längsschnitt betrachtet, linsenförmig in Richtung der beweglichen, abzudichtenden Oberfläche des zweiten Maschinenelements vorgewölbt sein. Somit wird unter anderem die Gefahr von Verkantungen, bei Verlagerungen des Dichtrings innerhalb des Einbauraums, reduziert. Die Gestaltung der Kontaktfläche wird so ausgeführt, dass die Kontaktspannungen einen günstigen Verlauf zeigen.

Der Nutgrund der Einbaunut ist bevorzugt gerundet ausgebildet. Ein derartiger Nutgrund ist besonders einfach und kostengünstig herstellbar, verglichen mit einem im Wesentlichen rechteckig begrenzten Nutgrund.

Die Stirnseiten können auf der dem zweiten Dichtteil radial abgewandten Seite durch einen Bogen verbunden sein. Ein solcher Dichtring kann beispielsweise mit einem Formstrahl oder durch formgebende Verarbeitung, wie Spritzgießen, hergestellt werden.

Die Übergänge zwischen dem ersten und dem zweiten Dichtteil sind bevorzugt gerundet ausgebildet. Derartige gerundete Übergänge weisen wegen fehlender unerwünschter Kerbspannungen bei Druckbeaufschlagung wesentlich bessere Gebrauchseigenschaften während einer wesentlich längeren Gebrauchsdauer auf, als eckige, scharfkantige Übergänge. Deren Formgebung wird somit ebenfalls vereinfacht.

Bevorzugt weist der Dichtring die stimseitigen Kanäle auf. Die Herstellung derartiger Kanäle im Dichtring ist wesentlich einfacher und kostengünstiger als Kanäle, die in der Seitenwand der Einbaunut, beispielsweise durch spanabhebende Fertigungsverfahren, angeordnet sind.

Der Dichtring besteht aus einem polymeren Werkstoff. Als besonders geeignet für einen derartigen Anwendungsfall haben sich Elastomere wie z.B. NBR, HNBR, FKM und thermoplastische Elastomere wie beispielsweise thermoplastische Polyurethane bewährt.

Solche Werkstoffe haben den Vorteil, dass dieser gegen die meisten abzudichtenden Medien resistent ist und über einen hohen Temperaturbereich gleichbleibend gute elastische Eigenschaften aufweist.

Der Dichtring ist bevorzugt einstückig und materialeinheitlich ausgebildet. Der erste und der zweite Dichtteil bestehen dadurch aus demselben Material. Die gesamte Dichtungsanordnung ist dadurch einfach und kostengünstig herstellbar.

Der Dichtring kann zu einer gedachten, axial angeordneten Radialebene symmetrisch ausgebildet sein. Durch die symmetrische Gestalt des Dichtrings ist dieser nicht nur einfach herstellbar. Auch die Montage ist besonders einfach; die Gefahr von Montagefehlern ist dadurch auf ein Minimum reduziert.

### Kurzbeschreibung der Zeichnung

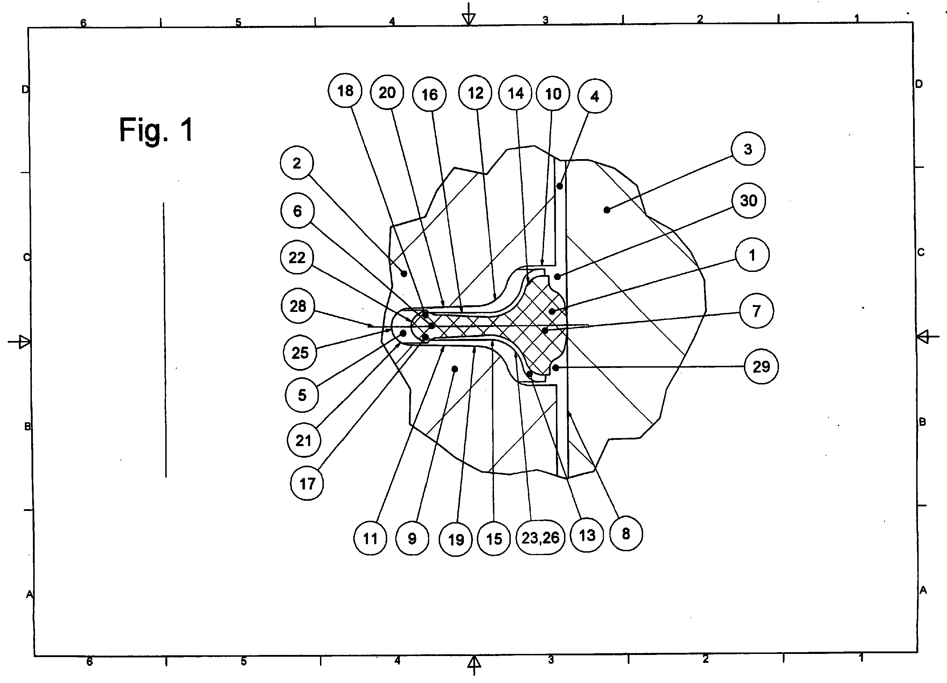

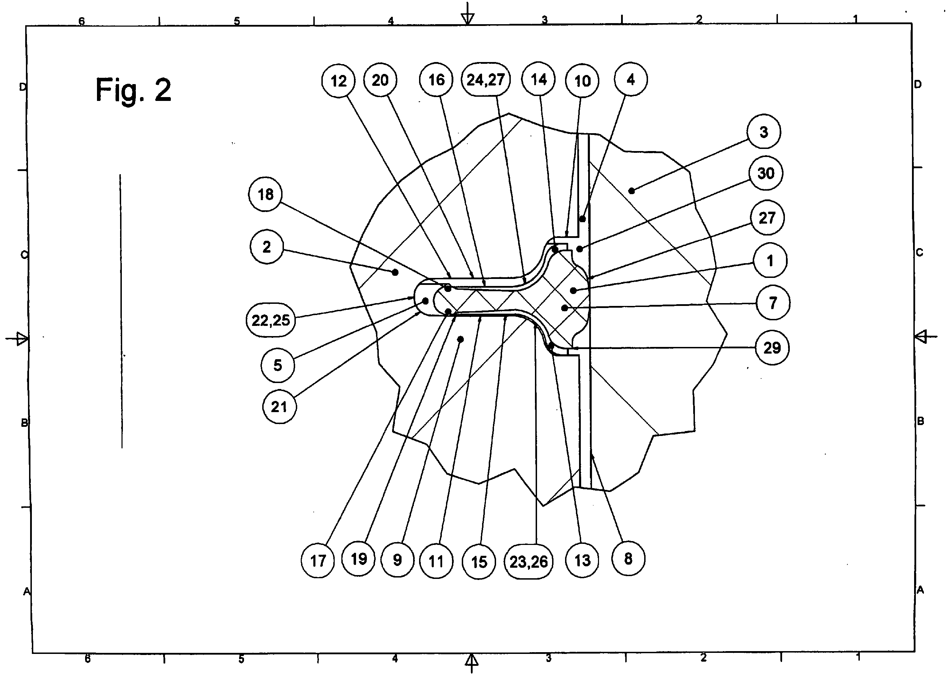

Ein Ausführungsbeispiel der erfindungsgemäßen Dichtungsanordnung ist nachfolgend anhand der Figuren 1 und 2 näher beschrieben.

Diese zeigen:
Fig. 1
   die Dichtungsanordnung im Nicht-Differenzdruck beaufschlagten Zustand,
Fig. 2
   die Dichtungsanordnung aus Fig. 1, wobei der Dichtring axial von oben mit einem relativen Überdruck beaufschlagt ist.

In den Figuren 1 und 2 ist ein Ausführungbeispiel der erfindungsgemäßen Dichtungsanordnung gezeigt. Der Dichtring 1 besteht aus einem polymeren Werkstoff und dichtet den Dichtspalt 4 zwischen zwei relativ translatorisch zueinander beweglichen Maschinenelementen 2, 3 ab, die einander mit radialem Abstand umschließen. Das erste Maschinenelement 2 ist in dem hier gezeigten Ausführungsbeispiel durch einen Kolben gebildet, das zweite Maschinenelement durch ein Gehäuse, das den Kolben umfangsseitig umschließt, wobei der Dichtring 1 die gegeneinander abzudichtenden Räume 29, 30 voneinander trennt. Die gegeneinander abzudichtenden Körper wie Kolben und Gehäusebohrung müssen nicht zwingend kreisrund sein, sondern können auch oval oder andere nicht-kreisrunde Formen haben.

Der Dichtring 1 ist, im Längsschnitt betrachtet, im Wesentlichen T-förmig ausgebildet und umfasst einen radialstegförmig ausgebildeten ersten Dichtteil 6 und einen sich in axialer Richtung erstreckenden zweiten Dichtteil 7. Der Dichtring 1 ist zu einer gedachten, axial in seiner Mitte angeordneten Radialebene 28 symmetrisch ausgebildet, wodurch sich eine einfache Montage des Dichtrings in die Einbaunut 5 ergibt und Montagefehler auf ein Minimum reduziert sind.

Um ein gutes Abdichtungsergebnis bei geringer Reibung und daraus resultierend eine lange Gebrauchsdauer zu erzielen, ist von entscheidender Wichtigkeit, dass der erste Dichtteil 6 ebenso wie der zweite Dichtteil 7 schwimmend innerhalb der Einbaunut 5 angeordnet sind. Durch die schwimmende Anordnung des ersten Dichtteils 6 legt sich dieser, abhängig von der Seite der relativen Überdruckbeaufschlagung, in axialer Richtung an die axial benachbart angrenzende Seitenwand 19, 20 der Einbaunut 5 dichtend an. Zur Druckbeaufschlagung des ersten Dichtteils 6 erstrecken sich die Kanäle 13, 14, die im hier gezeigten Ausführungsbeispiel einen Bestandteil des Dichtrings 1 bilden, bis in den ersten Dichtteil 6.

Die Dichtkanten 17, 18, sind einander in axialer Richtung gegenüberliegend angeordnet, radial möglichst nahe am Nutgrund 21.

Der Bogen 22 und die Übergänge 23, 24 sind jeweils gerundet mit Rundungsradien 25, 26, 27 ausgebildet, um während der bestimmungsgemäßen Verwendung gebrauchsdauerverringemde Kerbspannungen in diesen Bereichen zu vermeiden. Der Dichtring 1 ist im hier gezeigten Ausführungsbeispiel einstückig und materialeinheitlich ausgebildet; der erste 6 und zweite Dichtteil 7 gehen einstückig und materialeinheitlich ineinander über.

In Fig. 1 ist die erfindungsgemäße Dichtungsanordnung im Nicht-Differenzdruck-beaufschlagten Zustand gezeigt. Die gedachte Radialebene 28 bildet die Symmetrielinie für den Dichtring 1 und die Einbaunut 5. In Fig. 1 ist der Druck in den gegeneinander abzudichtenden Räumen 29, 30 ausgeglichen.

In Fig. 2 wurde, bezogen auf Fig. 1, der Druck im abzudichtenden Raum 30 erhöht, sodass im Raum 30, bezogen auf Raum 29 ein relativer Überdruck herrscht. Bedingt durch die Druckbeaufschlagung verlagert sich der Dichtring 1 innerhalb der Einbaunut 5 in Richtung des Raums 29 mit vergleichsweise geringerem Druck, wobei der relative Überdruck an der gesamten Stirnseite 10, vom zweiten Dichtteil 7 über den Kanal 14 bis zur Dichtkante 18, anliegt. Durch den Überdruck legt sich die Dichtkante 17 dichtend an die Oberfläche 19 der Einbaunut 5 an und dichtet dadurch die Räume 29, 30 zuverlässig gegeneinander ab.

In Fig. 1 berühren die Dichtkanten 18, 17 die jeweils axial benachbart angrenzenden Seitenwände 19, 20 der Einbaunut unter elastischer Vorspannung nur leicht oder gar nicht.

In Fig. 2 berührt die Dichtkante 17 die Seitenwand 19 demgegenüber mit wesentlich geringerem Anpressdruck oder gar nicht, beispielsweise abhängig von den Toleranzen. Der abzudichtende Druck baut sich gedrosselt auf, sodass das Dichtteil 6, bedingt durch seine membranähnliche Form sich zur druckabgewandten Seite elastisch verformt und somit die Dichtkante 17 gegen die Oberfläche 11/die Stirnwand 19 gepresst wird.

## Patentansprüche

1. Dichtungsanordnung, umfassend einen Dichtring (1) zur Abdichtung von zwei relativ translatorisch zueinander beweglichen ersten (2) und zweiten (3) Maschinenelementen, die einander mit radialem Abstand umschließen, wobei der durch den Abstand gebildete Spalt als Dichtspalt (4) ausgebildet ist, wobei der Dichtring (1) in einer im Wesentlichen kongruent gestalteten, in Richtung des relativ beweglichen zweiten Maschinenelements (3) offenen Einbaunut (5) des ersten Maschinenelements (2) schwimmend angeordnet ist, mit einem statisch in der Einbaunut (5) abdichtenden radialstegförmig ausgebildeten ersten Dichtteil (6) und einem dynamisch abdichtenden zweiten Dichtteil (7), der die relativ zur Einbaunut (5) bewegliche abzudichtende Oberfläche (8) des zweiten Maschinenelements (3) dichtend berührt, **dadurch gekennzeichnet, dass** der Dichtring (1), im Längsschnitt betrachtet, im Wesentlichen T-förmig ausgebildet ist, dass sich der zweite Dichtteil (7) in axialer Richtung erstreckt und dass der Dichtring (1) axial beiderseits stirnseitig (9, 10) mit der Oberfläche (11, 12) der benachbarten Einbaunut (5) jeweils zumindest einen sich teilweise in den Bereich des ersten Dichtteils (6) erstreckenden Kanal (13, 14) zur jeweils stirnseitigen Druckbeaufschlagung des ersten Dichtteils (6) aufweist.

2. Dichtungsanordnung nach Anspruch 1, **dadurch gekennzeichnet, dass** der erste Dichtteil (6) auf seinen sich in axialer Richtung gegenüberliegend angeordneten und in radialer Richtung erstreckenden Stirnseiten (15, 16) jeweils zumindest eine in axialer Richtung erhabene und umfangsseitig umlaufende Dichtkante (17, 18) aufweist, die unter elastischer Vorspannung dichtend an die jeweils axial benachbart angrenzenden Stirnwände (19, 20) der Einbaunut (5) anlegbar sind.

3. Dichtungsanordnung nach Anspruch 2, **dadurch gekennzeichnet, dass** die Dichtkanten (17, 18) am dem zweiten Dichtteil (7) radial abgewandten Ende der Stirnseiten (15, 16) angeordnet sind.

4. Dichtungsanordnung nach einem der Ansprüche 1 bis 3, **dadurch gekennzeichnet, dass** der zweite Dichtteil (7), im Längsschnitt betrachtet, linsenförmig in Richtung der beweglichen abzudichtenden Oberfläche (8) des zweiten Maschinenelements (3) vorgewölbt ist.

5. Dichtungsanordnung nach einem der Ansprüche 1 bis 4, **dadurch gekennzeichnet, dass** der Nutgrund (21) der Einbaunut (5) halbkreisförmig ausgebildet ist.

6. Dichtungsanordnung nach einem der Ansprüche 1 bis 5, **dadurch gekennzeichnet, dass** die Stirnseiten (15, 16) auf der dem zweiten Dichtteil (7) radial abgewandten Seite durch einen halbkreisförmigen Bogen (22) verbunden sind.

7. Dichtungsanordnung nach einem der Ansprüche 1 bis 6, **dadurch gekennzeichnet, dass** die Übergänge (23, 24) zwischen erstem (6) und zweitem Dichtteil (7) gerundet ausgebildet sind.

8. Dichtungsanordnung nach einem der Ansprüche 1 bis 7, **dadurch gekennzeichnet, dass** der Dichtring (1) die stirnseitigen Kanäle (13, 14) aufweist.

9. Dichtungsanordnung nach einem der Ansprüche 1 bis 8, **dadurch gekennzeichnet, dass** der Dichtring (1) aus einem polymeren Werkstoff besteht.

10. Dichtungsanordnung nach einem der Ansprüche 1 bis 9 **dadurch gekennzeichnet, dass** der Dichtring (1) einstückig und materialeinheitlich ausgebildet ist.

11. Dichtungsanordnung nach einem der Ansprüche 1 bis 10, **dadurch gekennzeichnet, dass** der Dichtring (1) zu einer gedachten, axial in seiner Mitte angeordneten Radialebene (28) symmetrisch ausgebildet ist.

## Claims

1. Sealing arrangement, comprising a sealing ring (1) for sealing off two first (2) and second (3) machine elements which are movable relative to one another in a translatory fashion and which surround one another with a radial spacing, with the gap formed by the spacing being formed as a sealing gap (4), with the sealing ring (1) being arranged in a floating fashion in a substantially congruently designed installation groove (5), which is open in the direction of the relatively movable second machine element (3), of the first machine element (2), having a radial-web-shaped first sealing part (6) which statically seals off in the installation groove (5) and having a dynamically sealing second sealing part (7) which is in sealing contact with the surface (8), which is movable relative to the installation groove (5) and is to be sealed off, of the second machine element (3), **characterized in that** the sealing ring (1), as viewed in cross section, is of substantially T-shaped design, **in that** the second sealing part (7) extends in the axial direction, and **in that** the sealing ring (1) has, axially at both sides, at the face side (9, 10) with the surface (11, 12) of the adjacent installation groove (5), in each case at least one duct (13, 14), which extends partially into the region of the first sealing part (6), for the in each case face-side pressure loading of the first sealing part (6).

2. Sealing arrangement according to Claim 1, **characterized in that** the first sealing part (6) has, on its face sides (15, 16) which are arranged so as to be situated oppositely in the axial direction and which extend in the radial direction, in each case at least one peripherally encircling sealing edge (17, 18) which is raised in the axial direction and which can, under elastic preload, be placed sealingly against the in each case axially adjacent adjoining end walls (19, 20) of the installation groove (5).

3. Sealing arrangement according to Claim 2, **characterized in that** the sealing edges (17, 18) are arranged at that end of the face sides (15, 16) which faces radially away from the second sealing part (7).

4. Sealing arrangement according to one of Claims 1 to 3, **characterized in that** the second sealing part (7), as viewed in cross section, is arched forward in the shape of a lens in the direction of the movable surface (8), which is to be sealed off, of the second machine element (3).

5. Sealing arrangement according to one of Claims 1 to 4, **characterized in that** the groove base (21) of the installation groove (5) is of semi-circular design.

6. Sealing arrangement according to one of Claims 1 to 5, **characterized in that** the face sides (15, 16) are connected, at the side facing radially away from the second sealing part (7), by means of a semicircular arc (22).

7. Sealing arrangement according to one of Claims 1 to 6, **characterized in that** the transitions (23, 24) between the first (6) and second sealing parts (7) are of rounded design.

8. Sealing arrangement according to one of Claims 1 to 7, **characterized in that** the sealing ring (1) has the face-side ducts (13, 14).

9. Sealing arrangement according to one of Claims 1 to 8, **characterized in that** the sealing ring (1) is composed of a polymeric material.

10. Sealing arrangement according to one of Claims 1 to 9, **characterized in that** the sealing ring (1) is of single-piece and materially integral design.

11. Sealing arrangement according to one of Claims 1 to 10, **characterized in that** the sealing ring (1) is of symmetrical design with respect to an imaginary radial plane (28) which is arranged axially in its centre.

## Revendications

1. Agencement d'étanchéité, comprenant une bague d'étanchéité (1) pour l'étanchéité de deux premier (2) et deuxième (3) éléments de machine relativement déplaçables en translation l'un par rapport à l'autre, qui s'entourent l'un l'autre à distance radiale, la fente formée par la distance étant réalisée sous forme de fente d'étanchéité (4), la bague d'étanchéité (1) étant disposée de manière flottante dans une rainure d'insertion (5) du premier élément de machine (2) de configuration essentiellement coïncidente, ouverte dans la direction du deuxième élément de machine (3) relativement déplaçable, avec une première partie d'étanchéité (6) réalisée en forme de nervure radiale réalisant l'étanchéité de manière statique dans la rainure d'insertion (5), et une deuxième partie d'étanchéité (7) réalisant l'étanchéité de manière dynamique, qui vient en contact de manière hermétique avec la surface (8) du deuxième élément de machine (3) qui doit être rendue étanche, déplaçable par rapport à la rainure d'insertion (5), **caractérisé en ce que** la bague d'étanchéité (1), considérée en coupe longitudinale, est réalisée essentiellement en forme de T, **en ce que** la deuxième partie d'étanchéité (7) s'étend dans la direction axiale et **en ce que** la bague d'étanchéité (1) présente du côté frontal (9, 10), axialement de part et d'autre, conjointement avec la surface (11, 12) de la rainure d'insertion adjacente (5), à chaque fois au moins un canal (13, 14) s'étendant en partie dans la région de la première partie d'étanchéité (6), pour solliciter en pression la première partie d'étanchéité (6) de chaque côté frontal.

2. Agencement d'étanchéité selon la revendication 1, **caractérisé en ce que** la première partie d'étanchéité (6) présente, sur ses côtés frontaux (15, 16) disposés en regard dans la direction axiale et s'étendant dans la direction radiale, à chaque fois au moins une arête d'étanchéité (17, 18) rehaussée dans la direction axiale et s'étendant tout autour de la périphérie, qui peut être appliquée hermétiquement avec précontrainte élastique contre les parois frontales respectives (19, 20) axialement adjacentes de la rainure d'insertion (5).

3. Agencement d'étanchéité selon la revendication 2, **caractérisé en ce que** les arêtes d'étanchéité (17, 18) sont disposées sur l'extrémité des côtés frontaux (15, 16) radialement opposée à la deuxième partie d'étanchéité (7).

4. Agencement d'étanchéité selon l'une quelconque des revendications 1 à 3, **caractérisé en ce que** la deuxième partie d'étanchéité (7), considérée en coupe longitudinale, est précintrée en forme de lentille dans la direction de la surface mobile à étanchéifier (8) du deuxième élément de machine (3).

5. Agencement d'étanchéité selon l'une quelconque des revendications 1 à 4, **caractérisé en ce que** la base de rainure (21) de la rainure d'insertion (5) est réalisée en forme de demi-cercle.

6. Agencement d'étanchéité selon l'une quelconque des revendications 1 à 5, **caractérisé en ce que** les côtés frontaux (15, 16) du côté radialement opposé à la deuxième partie d'étanchéité (7) sont connectés par un arc en forme de demi-cercle (22).

7. Agencement d'étanchéité selon l'une quelconque des revendications 1 à 6, **caractérisé en ce que** les transitions (23, 24) entre la première (6) et la deuxième (7) partie d'étanchéité sont réalisées sous forme arrondie.

8. Agencement d'étanchéité selon l'une quelconque des revendications 1 à 7, **caractérisé en ce que** la bague d'étanchéité (1) présente les canaux du côté frontal (13, 14).

9. Agencement d'étanchéité selon l'une quelconque des revendications 1 à 8, **caractérisé en ce que** la bague d'étanchéité (1) se compose d'un matériau polymère.

10. Agencement d'étanchéité selon l'une quelconque des revendications 1 à 9, **caractérisé en ce que** la bague d'étanchéité (1) est réalisée d'une seule pièce et dans le même matériau.

11. Agencement d'étanchéité selon l'une quelconque des revendications 1 à 10, **caractérisé en ce que** la bague d'étanchéité (1) est réalisée de manière symétrique par rapport à un plan radial imaginaire (28) disposé axialement en son centre.
